(19) Europäisches Patentamt
European Patent Office
Office européen des brevets

(11) **EP 2 674 776 B1**

(12) **EUROPÄISCHE PATENTSCHRIFT**

(45) Veröffentlichungstag und Bekanntmachung des Hinweises auf die Patenterteilung:
**06.04.2016 Patentblatt 2016/14**

(51) Int Cl.:
*G01S 7/41* *(2006.01)*     *G01S 13/93* *(2006.01)*
*G01S 13/46* *(2006.01)*

(21) Anmeldenummer: **13163948.6**

(22) Anmeldetag: **16.04.2013**

(54) **Ermittelung eines Überfahrbarkeitsindikators für ein Objekt**

Indicator to determine whether an object can be driven over

Détermination d'un indicateur de possibilité de passage pour un objet

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.06.2012 DE 102012209870**

(43) Veröffentlichungstag der Anmeldung:
**18.12.2013 Patentblatt 2013/51**

(73) Patentinhaber: **ROBERT BOSCH GMBH**
**70442 Stuttgart (DE)**

(72) Erfinder:
• **Kuehnle, Goetz**
**71282 Hemmingen (DE)**
• **Schoor, Michael**
**70195 Stuttgart (DE)**

(56) Entgegenhaltungen:
EP-A1- 1 923 717     WO-A1-99/27384
DE-A1- 19 801 617     DE-A1-102010 007 415

EP 2 674 776 B1

**Beschreibung**

Die Erfindung betrifft ein Verfahren und eine Vorrichtung zum Ermitteln eines Überfahrbarkeitsindikators für ein Objekt mittels frequenzmodulierter Radarsignale eines Kraftfahrzeug-Radarsensors.

STAND DER TECHNIK

Radarsensoren werden beispielsweise in ACC-Systemen (Adaptive Cruise Control) für Kraftfahrzeuge eingesetzt und dienen dazu, die Positionen und Relativgeschwindigkeiten von Objekten zu bestimmen, so dass dann im Rahmen einer adaptiven Geschwindigkeitsregelung die Geschwindigkeit des eigenen Fahrzeugs an die Geschwindigkeit eines vorausfahrenden Fahrzeugs angepasst und der Abstand zu dem vorausfahrenden Fahrzeug auf einen geeigneten Wert geregelt werden kann.

Ein derartiger Radarsensor weist beispielsweise mehrere Kanäle auf, denen jeweils wenigstens ein Antennenelement und eine Auswerteeinrichtung zugeordnet ist. Die in den verschiedenen Kanälen empfangenen Hochfrequenzsignale werden durch Mischen mit einer Referenzfrequenz in Niederfrequenzsignale umgewandelt, die auch als Zwischenfrequenzsignale (IF, intermediate frequency) bezeichnet werden und in einer Auswerteelektronik ausgewertet werden. Beispielsweise werden die Niederfrequenzsignale mit Analog/Digital-Umsetzern digitalisiert und dann digital weiterverarbeitet.

Jedes Radarobjekt zeichnet sich im Frequenzspektrum eines Kanals in der Form eines Peaks ab, dessen Lage von der Dopplerverschiebung und damit von der Relativgeschwindigkeit des Radarobjekts abhängig ist. Wenn die Sendefrequenz des Radarsystems moduliert wird, wie beispielsweise bei einem FMCW-Radar (Frequency Modulated Continuous Wave), ist die Lage der Peaks auch von der Laufzeit der Radarsignale abhängig. Wenn das gesendete Signal in einem Messzyklus unterschiedliche, geeignet gewählte Frequenzrampen aufweist, lässt sich aus den Frequenzen der erhaltenen Peaks die Relativgeschwindigkeit des Objekts und der Abstand des Objekts berechnen.

DE 10 2005 024 716 A1 beschreibt ein Verfahren und eine Vorrichtung zur Erkennung und Klassifizierung von Objekten, bei dem von einem Radarsensor empfangene Signale durch einen Vergleich mit hinterlegten charakteristischen Werten ausgewertet werden und aufgrund der Auswertung auf die Klasse des reflektierenden Objekts geschlossen wird. Als Eigenschaft dieser Klassen kann vorgesehen sein, dass die Objekte passierbar sind (beispielsweise überfahrbarer Kanaldeckel, überfahrbare Getränkedose, unterfahrbare Straßenbrücke) oder nicht passierbar sind und nicht überfahren werden können (beispielsweise Personenkraftwagen, Lastkraftwagen, Zweiräder, Leitplanken, Straßenschilder). Ein Vergleich mit charakteristischen Mustern erfolgt beispielsweise durch Auswertung des Spektrums der reflektierten Leistung einer Objektreflexion, insbesondere einer Hüllkurve des Spektrums, sowie einer Phasenlage.

DE 10 2010 007 415 A1 beschreibt ein Radarsignal-Verarbeitungsverfahren zur Schätzung einer Objekthöhe eines Objekts über einer reflektierenden Fläche, bei welchem eine zeitliche Veränderung einer Entfernung des Objekts von einer Radaranordnung bestimmt und eine Intensitätsmodulation eines Empfangssignals ermittelt wird. Das Verfahren basiert auf der Interferenz von Radarwellen, welche durch Reflexion an einer Fahrbahnoberfläche entsteht. Die Interferenzmuster führen während der Fahrzeugannäherung an ein Objekt zu einer Intensitätsmodulation in Form einer oszillierenden Rückstreuamplitude des Radarsignals. Aus einem Verlauf der Intensitätsmodulation über einer reziproken Entfernung des Objekts und/oder über dem Quotienten aus einer Radarhöhe und der Entfernung des Objekts wird eine Aussage über die Objekthöhe des Objekts über der reflektierenden Fläche abgeleitet.

DE 198 01 617 A1 beschreibt ein Radarsignal-Verarbeitungsverfahren zur Schätzung der Höhe eines Objektes über einer reflektierenden Fläche. Das Entstehen eines Interferenzmusters des Strahlungsfeldes der Radarantenne wird genutzt, indem die Intensitätsmodulation eines Empfangssignals im zeitlichen Verlauf eines radial zur Radaranordnung bewegten Objektes ausgewertet und in Verbindung mit der gemessenen Objektentfernung zur Schätzung eines Wertes für die Höhe des Objektes über der Fahrbahn herangezogen wird.

WO 99/27384 A1 beschreibt ein ähnliches Verfahren, bei dem basierend auf Änderungen der Amplitude der Radarreflektion im Verlauf einer Verringerung einer Objektentfernung ein Objekt als ein Überkopf-Objekt oder ein Bodenobjekt klassifiziert wird.

EP 1 923 717 A1 beschreibt ein Verfahren der Bestimmung einer Höhe eines Zielobjektes eines Radarsystems. Es werden bei einer Vielzahl unterschiedlicher Abstände von dem Zielobjekt reflektierte Radarsignale erfasst. Anhand der Amplituden der Radarsignale wird bestimmt, ob eine Wechselwirkung zwischen Signalen aus einem direkten Signalweg und einem Signalweg mit Reflexion am Boden zu einer fluktuierenden Amplitude als Funktion des Abstandes führt, die mit einer Objekthöhe korreliert ist.

DE 10 2010 007 415 A1 beruht auf einer Auswertung des Verlaufs einer intensitätsmodulation durch Interferenz in Abhängigkeit von einer Entfernung des Objektes.

OFFENBARUNG DER ERFINDUNG

Für Fahrassistenzsysteme, insbesondere Fahrsicherheitssysteme, die in der Lage sind, basierend auf der Detektierung eines Objekts eine automatische Notbremsung einzuleiten, ist es wünschenswert, dass bei der Annäherung an ein Objekt zuverlässig und möglichst früh eine Klassifizierung des detektierten Objektes erfolgen kann. Dies kann zur Vermeidung von Fehlauslösungen einer automatischen Notbremsung beitragen und insgesamt den Nutzen des Fahrassistenzsystems erhöhen.

Ein für die Klassifizierung eines detektierten Objektes besonders relevantes Merkmal ist es, ob das Objekt überfahrbar ist oder nicht überfahrbar ist. Eine direkte Auswertung eines reflektierten Radarsignals zur Ermittelung einer Objekthöhe, beispielsweise mittels einer Winkelschätzung in Elevationsrichtung, stellt jedoch sehr hohe Anforderungen an die Winkelauflösung des Radarsensors in Elevationsrichtung.

Aufgabe der Erfindung ist es, einen neuen Indikator zur Verfügung zu stellen, der eine Klassifizierung eines detektierten Radarobjektes unterstützen oder verbessern kann.

Ein Beitrag zur Lösung dieser Aufgabe wird erfindungsgemäß durch ein Verfahren nach Anspruch 1 geleistet, bei dem, basierend auf Amplitudenverhältnissen zwischen empfangenen, von einem Objekt reflektierten Radarsignalen, die in unterschiedlichen Frequenzbereichen und in zeitlicher Nähe zueinander gesendet wurden, ein Auftreten von Interferenz zwischen einem ersten Ausbreitungsweg von Radarsignalen zwischen einem Radarsensor und dem Objekt und einem zweiten Ausbreitungsweg mit zusätzlicher Reflexion an einer Fahrbahn erkannt wird, wobei basierend auf dem Erkennen eines Auftretens von Interferenz ein Überfahrbarkeitsindikator für das Objekt ermittelt wird. Vorzugsweise entspricht das Amplitudenverhältnis einem Quotienten der Amplituden. Die Amplitudenverhältnisse können beispielsweise durch Quotientenbildung der Amplituden bzw., als logarithmische Amplitudenverhältnisse, durch Subtraktion der logarithmischen Amplituden zur Verfügung gestellt werden. Anstelle einer Quotientenbildung kann aber auch ein Amplitudenverhältnis in Form eines Ergebnisses eines Vergleichs der Amplituden zur Verfügung gestellt werden.

Beispielsweise kann es sich bei dem ersten Ausbreitungsweg um einen direkten Ausbreitungsweg zwischen dem Radarsensor und dem Objekt handeln, und bei dem zweiten Ausbreitungsweg kann eine zusätzliche Reflexion auf dem Hinweg eines Radarsignals vom Radarsensor zum Objekt und/oder auf dem Rückweg des reflektierten Radarsignals vom Objekt zum Radarsensor auftreten.

Insbesondere destruktive Interferenz zwischen den die verschiedenen Ausbreitungswege durchlaufenen Radarsignalen kann zu einer signifikanten Verringerung der Amplitude des Empfangssignals führen. Beispielsweise wird ein Auftreten von Interferenz anhand eines unterschiedlich stark ausgeprägten Auftretens von Interferenz in den unterschiedlichen Frequenzbereichen der übertragenen Radarsignale erkannt. Tritt beispielsweise destruktive Interferenz zwischen den unterschiedlichen Ausbreitungswegen hauptsächlich in einem der unterschiedlichen Frequenzbereiche der Radarsignale auf, während die Bedingung für destruktive Interferenz für einen jeweiligen anderen Frequenzbereich eines Radarsignals nicht erfüllt ist, so können die Amplituden der betreffenden Empfangssignale bei ansonsten im wesentlichen denselben Übertragungseigenschaften der Signalübertragungsstrecke Radarsensor-Objekt-Radarsensor stark voneinander abweichen. In Situationen ohne Interferenz zwischen den unterschiedlichen Ausbreitungswegen unterliegen hingegen die in unterschiedlichen Frequenzbereichen und in zeitlicher Nähe zueinander gesendeten Radarsignale im wesentlichen denselben Einflüssen, so dass die Amplituden der Empfangssignale kaum voneinander abweichen. Das Amplitudenverhältnis zwischen den Empfangssignalen, die den in unterschiedlichen Frequenzbereichen gesendeten Sendesignalen zugeordnet sind, ist somit weitgehend frei von anderen, die Signalamplitude beeinflussenden Faktoren und eignet sich daher besonders gut, um selektiv auf das Vorliegen oder Nicht-Vorliegen einer Interferenzsituation zu schließen.

Bei einem Zielobjekt mit gegebener Objekthöhe über der Fahrbahn und bei einer gegebenen Sensorhöhe des Radarsensors tritt destruktive Interferenz bei bestimmten Abständen d zwischen Radarsensor und Objekt auf, während in Abstandsbereichen zwischen diesen Abständen d die Bedingung für destruktive Interferenz für keines der Radarsignale erfüllt ist.

Beispielsweise kann das Auftreten der Interferenz basierend auf für einen Bereich eines Abstandes zwischen dem Radarsensor und dem Objekt ermittelten Verlauf der Amplitudenverhältnisse zwischen den empfangenen, von dem Objekt reflektierten Radarsignalen, die in unterschiedlichen Frequenzbereichen gesendet wurden, erkannt werden. Der Bereich des Abstandes kann beispielsweise so gewählt werden, dass bei einer typischen Objekthöhe eines zu detektierenden Objektes das Auftreten der Interferenz in dem Bereich des Abstandes zu erwarten ist.

Beispielsweise kann basierend auf dem Erkennen des Auftretens von Interferenz ein Überfahrbarkeitsindikator für das Objekt ermittelt werden, wobei der Überfahrbarkeitsindikator einen ersten Wert annimmt, der das Objekt als überfahrbar bewertet oder klassifiziert, wenn kein Auftreten von Interferenz erkannt wird, und der Überfahrbarkeitsindikator einen anderen Wert annimmt, wenn das Auftreten von Interferenz erkannt wird. Der Überfahrbarkeitsindikator kann beispielsweise ein Objekt als nicht überfahrbar oder als potentiell nicht überfahrbar bewerten oder klassifizieren.

Beispielsweise kann basierend auf dem Erkennen eines Auftretens von Interferenz und basierend auf wenigstens einem Wert des Abstandes zwischen dem Radarsensor und dem Objekt, bei welchem Abstand Interferenz, insbesondere destruktive Interferenz, auftritt, Höheninformation über das Objekt ermittelt werden. Die Höheninformation bildet insbesondere einen Überfahrbarkeitsindikator für das Objekt. So kann beispielsweise eine geschätzte Objekthöhe ermittelt werden. Dabei kann eine Objekthöhe, die unterhalb eines Schwellwertes liegt, das Objekt als überfahrbar bewerten oder klassifizieren.

Weiter wird ein Beitrag zur Lösung der genannten Aufgabe erfindungsgemäß durch eine Vorrichtung nach Anspruch 11 zum Ermitteln eines Überfahrbarkeitsindikators für ein Objekt mittels frequenzmodulierter Radarsignale eines Kraftfahrzeug-Radarsensors geleistet, wobei die Vorrichtung aufweist:

- eine Einheit zum Bestimmen von Amplitudenverhältnissen zwischen vom Radarsensor empfangenen, von einem Objekt reflektierten Radarsignalen, die von einem Radarsensor in unterschiedlichen Frequenzbereichen und in zeitlicher Nähe zueinander gesendet wurden,
- eine Erkennungseinheit zum Erkennen eines Auftretens von Interferenz zwischen einem direkten Ausbreitungsweg von Radarsignalen zwischen dem Radarsensor und dem Objekt und einem indirekten Ausbreitungsweg mit zusätzlicher Reflexion an einer Fahrbahn, basierend auf den bestimmten Amplitudenverhältnissen, und
- eine Bewertungseinheit, die dazu eingerichtet ist, basierend auf dem Erkennen eines Auftretens von Interferenz durch die Erkennungseinheit einen Überfahrbarkeitsindikator für das Objekt zu ermittelten.

Weitere vorteilhafte Ausgestaltungen der Erfindung sind jeweils in den Unteransprüchen angegeben.

KURZE BESCHREIBUNG DER ZEICHNUNGEN

Ausführungsbeispiele der Erfindung sind in den Zeichnungen dargestellt und in der nachfolgenden Beschreibung näher erläutert.
Es zeigen:

Fig. 1   eine schematische Darstellung von Ausbreitungswegen von Radarsignalen zwischen einem Radarsensor eines Fahrzeuges und einem Objekt;

Fig. 2   eine schematische Darstellung eines Frequenzverlaufes einer Frequenzmodulation gesendeter Radarsignale;

Fig. 3   ein schematisches Blockschaltbild eines Kraftfahrzeug-Radarsystems;

Fig. 4   einen theoretischen Verlauf eines Amplitudenverhältnisses von Empfangssignalen in Abhängigkeit vom Objektabstand;

Fig. 5   eine schematische Darstellung eines gemessenen, abstandsabhängigen Verlaufs eines Amplitudenverhältnisses empfangener Radarsignale, die von einem Objekt unmittelbar auf Fahrbahnhöhe reflektiert wurden; und

Fig. 6   eine schematische Darstellung eines gemessenen, abstandsabhängigen Verlaufs eines Amplitudenverhältnisses empfangener Radarsignale, die von einem nicht überfahrbaren Objekt reflektiert wurden.

BESCHREIBUNG VON AUSFÜHRUNGSFORMEN

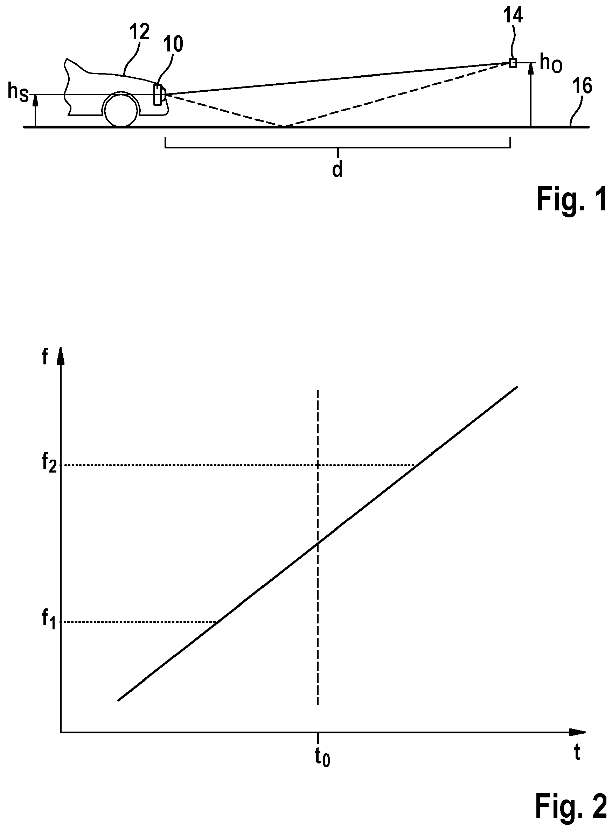

Fig. 1 zeigt eine Situation, in der ein Radarsensor 10, der in einem Fahrzeug 12 montiert ist, ein Objekt 14 erfassen und detektieren kann. Der Radarsensor 10 ist in einer Höhe $h_s$ über einer Fahrbahn 16 angeordnet. Das Objekt 14 hat eine Höhe $h_o$ über der Fahrbahn 16.
Eine durchgezogene Linie zeigt einen ersten, direkten Ausbreitungsweg von Radarsignalen vom Radarsensor 10 zum Objekt 14 und zurück zum Radarsensor 10. Eine gestrichelte Linie zeigt einen zweiten, indirekten Ausbreitungsweg, bei dem eine zusätzliche Reflexion an der Fahrbahn 16 sowohl auf dem Hinweg vom Radarsensor 10 zum Objekt 14 als auch auf dem Rückweg zurück zum Radarsensor 10 auftritt. Weitere mögliche Ausbreitungswege oder Übertragungswege der Radarsignale können sich daraus ergeben, dass ein Radarsignal auf dem Hinweg und auf dem Rückweg jeweils unterschiedliche Ausbreitungswege nimmt, so dass der Ausbreitungsweg insgesamt genau eine Reflexion an der Fahrbahn 16 umfasst.
Das Auftreten von destruktiver Interferenz zwischen unterschiedlichen Übertragungswegen der Radarsignale ist bei einem Objekt 14 mit gegebener Objekthöhe und gegebener Sensorhöhe $h_s$ von den Frequenzen der Radarsignale und vom Abstand d, d.h. der Entfernung des Objektes 14 vom Radarsensor 10 in Richtung parallel zur Fahrbahn 16, abhängig.
Im allgemeinen hängt die Bedingung für destruktive Interferenz empfindlich von der Frequenz der Radarsignale ab. So kann bei im übrigen unveränderten Parametern die Bedingung für destruktive Interferenz bereits durch eine Veränderung der Frequenz des ausgesendeten Radarsignals in einer Größenordnung, wie sie bei einer typischen Frequenzmodulationsrampe eines FMCW-Radarsensors auftritt, aufgehoben werden.

Fig. 2 zeigt ein Beispiel einer Frequenzmodulationsrampe eines FMCW-Radarsignals des Radarsensors 10, bei der die Frequenzrampe eine linear ansteigende Frequenz aufweist. Die Frequenz wird beispielsweise über einen Frequenzhub von 1 GHz von 76,25 GHz auf 77,25 GHz angehoben.

Zur Erkennung des Auftretens von Interferenz zwischen den unterschiedlichen Ausbreitungswegen erfolgt eine im folgenden näher beschriebene Auswertung, bei der die Empfangssignale der in unterschiedlichen Frequenzbereichen gesendeten Radarsignale in Beziehung zueinander gesetzt werden. Der zeitliche Verlauf des Empfangssignals wird dabei zunächst in zwei Teile geteilt, die getrennt ausgewertet werden.

Fig. 2 zeigt an der Frequenzmodulationsrampe die zeitliche Unterteilung in ein erstes Radarsignal bei $t < t_0$ und ein zweites Radarsignal bei $t \geq t_0$. Die ersten und zweiten Radarsignale entsprechen jeweiligen Frequenzmodulationsrampen mit einer Mittenfrequenz $f_1$ bzw. $f_2$. Die Mittenfrequenzen unterscheiden sich im beschriebenen Beispiel um 500 MHz. Es ist $f_1$ = 76,5 GHz und $f_2$ = 77,0 GHz.

Die den jeweiligen Teilrampen entsprechenden Radarsignale werden unmittelbar aufeinanderfolgend gesendet, so dass die Übertragungssituation und insbesondere die Ausbreitungswege für die beiden Radarsignale annähernd identisch sind.

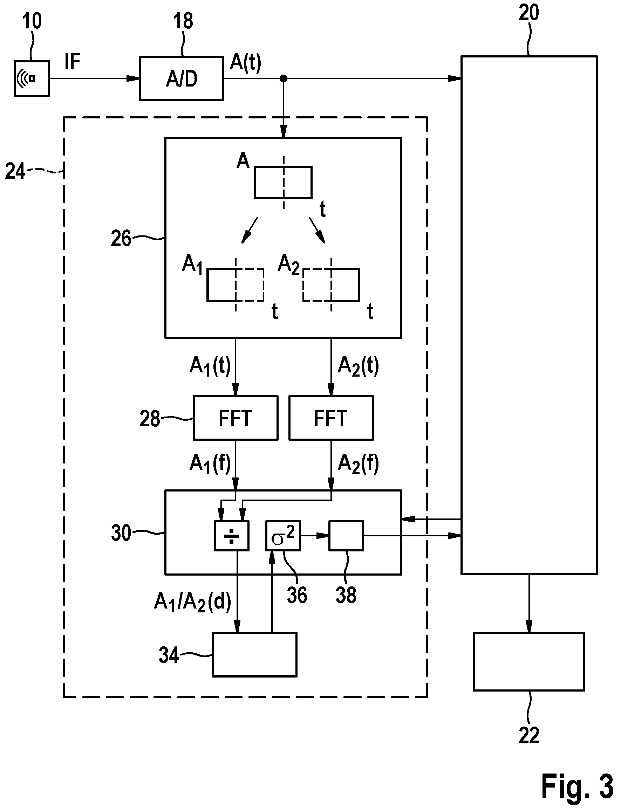

Fig. 3 zeigt schematisch einen Aufbau eines Radarsystems für Kraftfahrzeuge. Das System umfasst eine Vorrichtung zum Ermitteln eines Überfahrbarkeitsindikators für ein Objekt. Diese Vorrichtung sowie ein Verfahren zum Ermitteln eines Überfahrbarkeitsindikators für ein Objekt werden im folgenden näher erläutert.

Das System umfasst den Radarsensor 10, bei dem es sich beispielsweise um einen mehrkanaligen Radarsensor handeln kann. Der Radarsensor 10 weist ein oder mehrere Antennenelemente zum Senden und/oder Empfangen von Radarsignalen auf. Im folgenden wird zur Vereinfachung der Darstellung lediglich ein Kanal betrachtet. In an sich bekannter Weise ist der Radarsensor 10 dazu eingerichtet, frequenzmodulierte Radarsignale auszusenden und von einem Objekt 14 reflektierte Radarsignale zu empfangen. Beispielsweise handelt es sich um einen FMCW-Radarsensor, bei dem die Frequenz eines gesendeten Radarsignals periodisch moduliert wird, insbesondere in Form wenigstens einer Frequenzrampe je Messzyklus. In einem Kanal des Radarsensors wird ein empfangenes Radarsignal mit dem ausgesendeten Radarsignal gemischt und so in ein Zwischenfrequenzsignal IF umgewandelt. Das Zwischenfrequenzsignal IF wird von einem Analog/Digital-Wandler 18 digitalisiert, und das digitalisierte Zwischenfrequenzsignal wird in Form des Amplitudenverlaufs A(t) einer Auswerteeinheit 20 zugeführt, die in an sich bekannter Weise durch Fourier-Transformation, insbesondere FFT (fast Fourier transformation), die Frequenzspektren der Empfangssignale der Rampen jedes Messzyklus bestimmt und auswertet. Beispielsweise werden anhand der Lagen von Peaks in den Frequenzspektren Relativgeschwindigkeiten v und Abstände d potentieller Radarobjekte ermittelt, und es wird eine Objektidentifizierung durchgeführt. Beispielsweise kann ein Peak in einem Frequenzspektrum einem detektierten Objekt zugeordnet werden. Weiter führt die Auswerteeinheit 20 beispielsweise eine Objektverfolgung (Tracking) durch unter Berücksichtigung des zeitlichen Verlaufs der Frequenzspektren über mehrere Messzyklen des Radarsensors 10.

Die Auswerteeinheit 20 steuert beispielsweise basierend auf der Objektdetektion ein Fahrassistenzsystem 22 an, beispielsweise ein Fahrsicherheitssystem und/oder ein ACC-System. Das Fahrassistenzsystem 22 ist insbesondere zum Eingriff in ein Antriebssystem und/oder ein Bremssystem des Fahrzeugs 12 ausgelegt. Beispielsweise kann das Fahrassistenzsystem 22 dazu eingerichtet sein, automatisch eine Notbremsung einzuleiten, wenn auf der Basis der Objektdetektion eine Gefahrensituation mit einer unmittelbar bevorstehenden Kollision mit einem Objekt 14 im Vorfeld des Fahrzeugs 12 erkannt wird. Dazu ist die Auswerteeinheit 20 beispielsweise dazu eingerichtet, ein detektiertes Objekt 14 im Vorfeld des Fahrzeugs 12 hinsichtlich seiner Überfahrbarkeit zu klassifizieren und die Klassifizierung eines detektierten Objekts bei der Beurteilung der Kollisionsgefahr heranzuziehen.

Das in Fig. 3 gezeigte System umfasst weiter eine zweite Auswerteeinheit in Form einer Vorrichtung 24 zum Ermitteln eines Überfahrbarkeitsindikators für ein Objekt.

Entsprechend der in Fig. 2 dargestellten Aufteilung einer Modulationsrampe in zeitlich aufeinanderfolgende erste und zweite Radarsignale mit den Mittenfrequenzen $f_1$ und $f_2$ erfolgt zunächst eine Aufteilung des zeitlichen Verlaufs des digitalisierten Zwischenfrequenzsignals A(t) in erste und zweite Zwischenfrequenzsignale, die den jeweiligen ersten und zweiten Radarsignalen zugeordnet sind. Das erste Zwischenfrequenzsignal entspricht somit dem Empfangssignal zum ersten Radarsignal, und das zweite Zwischenfrequenzsignal entspricht somit im wesentlichen einem Empfangssignal zum zweiten Radarsignal. Die Zwischenfrequenzsignale werden beispielsweise mit einem Fenster multipliziert, beispielsweise einem Kaiser-Fenster oder einem Chebychev-Fenster, und, beispielsweise durch Zero-Padding, auf eine Datensatzlänge entsprechend dem ursprünglichen Zwischenfrequenzsignal A(t) aufgefüllt.

Die von der Einheit 26 so bereitgestellten Zwischenfrequenzsignale $A_1(t)$ und $A_2(t)$ werden jeweils durch eine FFT-Einheit 28 einer schnellen Fourier-Transformation unterzogen. Die von den FFT-Einheiten 28 bereitgestellten Frequenzspektren $A_1(f)$ und $A_2(f)$ werden dann von einer Verarbeitungseinheit 30 weiter verarbeitet. Die Verarbeitungseinheit 30 umfasst eine Einheit 32 zum Bestimmen von Amplitudenverhältnissen und ist mit einem Speicher 34 zum Speichern eines abstandsabhängigen Verlaufes der Amplitudenverhältnisse verbunden. Weiter umfasst die Verarbeitungseinheit 30 eine Erkennungseinheit 36 zum Erkennen eines Auftretens von Interferenz sowie eine Bewertungseinheit 38, die dazu eingerichtet ist, basierend auf einem von der Erkennungseinheit 36 erkannten Auftreten von Interferenz einen Überfahrbarkeitsindikator für ein Objekt zu ermitteln.

Die Einheit 32 bestimmt für ein vom Radarsensor 10 erfasstes Objekt 14 die Signalamplitude $A_1$ bzw. $A_2$ der dem Objekt 14 zugeordneten Peaks in den Frequenzspektren $A_1(f)$ und $A_2(f)$. Die Einheit 32 greift dabei beispielsweise auf Objektinformation zu, die von der Auswerteeinheit 20 bereitgestellt wird. Die Objektinformation kann beispielsweise Zuordnungsinformation umfassen, die einen Peak im jeweiligen Frequenzspektrum dem Objekt 14 zuordnet. Weiter umfasst die Objektinformation den Objektabstand d. Wenn die Datensatzlängen der Zwischenfrequenzsignale jeweils mit der Datensatzlänge der von der Auswerteeinheit 20 ausgewerteten Zwischenfrequenzsignale übereinstimmen, ergibt sich eine besonders einfache Zuordnung der aus dem Frequenzspektrum gewonnenen Objektinformation der Auswerteeinheit 20 zu den Frequenzspektren $A_1(f)$ und $A_2(f)$.

Das einem detektierten Objekt 14 zugeordnete, von der Einheit 32 ermittelte Amplitudenverhältnis in Form des Amplitudenquotienten $A_1/A_2$ bzw. der Differenz der logarithmischen Amplituden wird für den jeweiligen Objektabstand d im Speicher 34 abgelegt. Dadurch wird bei Annäherung an das Objekt 14 ein abstandsabhängiger Verlauf des Amplitudenverhältnisses gewonnen. Der Verlauf wird beispielsweise für einen Bereich des Abstandes d bestimmt, und insbesondere für diskrete Werte des Abstandes d innerhalb des Bereichs.

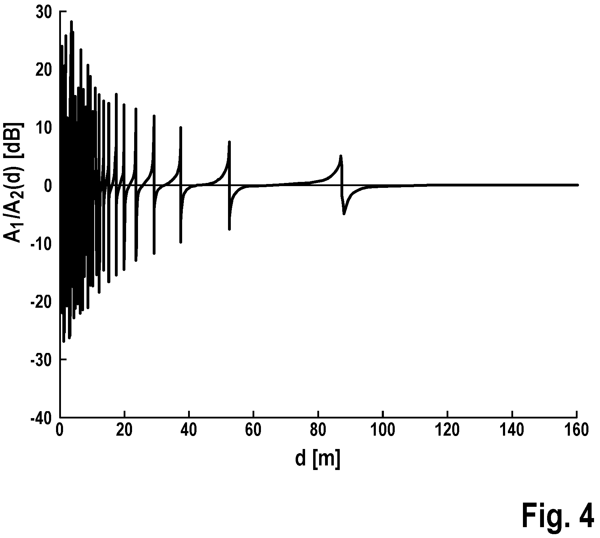

Fig. 4 zeigt beispielhaft für eine theoretische Modellsituation den abstandsabhängigen Verlauf des Amplitudenverhältnisses in dB über dem Abstand d in Metern. Dabei wurde eine Sensorhöhe $h_s$ von 0,35 m und eine Objekthöhe $h_o$ von 0,8 m angenommen, und es wurden Radarsignale gemäß dem in Fig. 2 gezeigten Beispiel berechnet.

Deutlich zu erkennen sind die mit abnehmendem Abstand d immer enger aufeinanderfolgenden Stellen destruktiver Interferenz. Wenn die Mittenfrequenz $f_1$ des ersten Radarsignals die Bedingung für destruktive Interferenz erfüllt, ist der Wert der Amplitude $A_1$ sehr gering, während gleichzeitig der Wert der Amplitude $A_2$ des von dem Radarsignal mit Mittenfrequenz $f_2$ empfangenen Empfangssignals kaum von destruktiver Interferenz betroffen ist. Es ergibt sich ein sehr geringes Amplitudenverhältnis. Bei geringfügig verändertem Abstand d erfüllt hingegen das Radarsignal mit der Mittenfrequenz $f_2$ die Bedingung für destruktive Interferenz, während das erste Radarsignal kaum mehr betroffen ist, so dass sich ein sehr hohes Amplitudenverhältnis ergibt. Das Interferenzmuster mit nah aufeinanderfolgenden positiven und negativen Ausschlägen des logarithmischen Amplitudenverhältnisses wiederholt sich jeweils in ähnlicher Form an den Abständen d, bei denen die Interferenzbedingung erfüllt ist, während in den Abstandsbereichen dazwischen das Amplitudenverhältnis annähernd gleich eins, d.h. 0 dB, ist.

Im Beispiel der Fig. 3 ist die Erkennungseinheit 36 dazu eingerichtet, basierend auf für einen Bereich des Abstandes d ermittelten Verlauf der Amplitudenverhältnisse $A_1/A_2$ das Auftreten von destruktiver Interferenz zu erkennen.

Die Erkennung der destruktiven Interferenz erfolgt beispielsweise, indem mittels eines gleitenden Fensters der im Speicher 34 abgelegte Verlauf der Amplitudenverhältnisse ausgewertet wird, wobei jeweils für den Verlauf der Amplitudenwerte innerhalb des gleitenden Fensters die Varianz des logarithmischen Amplitudenverhältnisses berechnet wird. Diese stellt ein Maß für die Abweichung des logarithmischen Amplitudenverhältnisses vom Mittelwert Null dar, also vom ohne destruktive Interferenz erwarteten Wert. Die Erkennungseinheit 36 erkennt beispielsweise dann das Vorliegen von destruktiver Interferenz, wenn die Varianz einen vorgegebenen Schwellwert überschreitet. Der Schwellwert kann beispielsweise abstandsabhängig sein.

Die Bewertungseinheit 38 ist dazu eingerichtet, basierend auf dem Erkennen eines Auftretens von Interferenz durch die Erkennungseinheit 36 einen Überfahrbarkeitsindikator für das Objekt 14 zu ermitteln, der der Auswerteeinheit 20 übergeben wird, so dass eine Objektklassifizierung unter Berücksichtigung des Überfahrbarkeitsindikators erfolgen kann.

Die Bewertungseinheit 38 ist beispielsweise dazu eingerichtet, basierend auf dem Erkennen eines Auftretens von Interferenz und basierend auf wenigstens einem weiteren, eine Signalübertragungsqualität des Ausbreitungsweges zwischen Radarsensor 10 und Objekt 14 charakterisierenden Parameter zu ermitteln. Als weiterer Parameter kann beispielsweise der Abstand d herangezogen werden, indem die von der Erkennungseinheit 36 bestimmte, abstandsabhängige Varianz des logarithmischen Amplitudenverhältnisses abstandsabhängig gewichtet wird. Es kann beispielsweise eine abstandsabhängige Gewichtung der Amplitudenverhältnisse zur Berücksichtigung der mit zunehmendem Abstand zunehmenden Streckendämpfung erfolgen, also der Dämpfung des Radarsignals entlang der zurückgelegten Wegstrecke. In entsprechender Weise kann auch eine Gewichtung des Amplitudenverhältnisses unter Berücksichtigung des Signal-Rausch-Verhältnisses (SNR, Signal Noise Ratio) oder des Radarquerschnitts des Objektes 14 (RCS, Radar Cross Section) erfolgen, da sich letztere mit zunehmendem Abstand d vom Objekt 14 verringern und aufgrund einer verschlechterten Signalqualität die Signifikanz der Werte der Amplitudenverhältnisse mit zunehmendem Abstand d abnimmt. Eine Gewichtung kann weiter an den erwarteten abstandsabhängigen Verlauf des Amplitudenverhältnisses angepasst sein. Beispielsweise kann oberhalb einer oberen Abstandsschranke eine verringerte Gewichtung erfolgen, da je nach Objekthöhe in Bereichen größerer Abstände keine Situationen destruktiver Interferenz zu erwarten sind.

Die Bewertungseinheit 38 ist beispielsweise dazu eingerichtet, einen Überfahrbarkeitsindikator zu ermitteln, der einen ersten Zustand aufweist, wenn ein Auftreten destruktiver Interferenz erkannt wird, und einen zweiten Zustand aufweist, wenn für einen vorgegebenen Bereich des Abstandes d ein Nichtauftreten destruktiver Interferenz erkannt wird. Der zweite Zustand kann beispielsweise eine Überfahrbarkeit des betreffenden Objektes als zutreffend oder gegeben bewerten und somit eine Klassifizierung des Objektes als überfahrbar unterstützen. Der erste Zustand kann beispielsweise die Überfahrbarkeit des betreffenden Objektes als potentiell unzutreffend bewerten, wenn beispielsweise aufgrund des Auftretens von destruktiver Interferenz die Nicht-Überfahrbarkeit des Objektes nicht ausgeschlossen werden kann. Diese Information kann ebenfalls eine Klassifizierung des Objektes unterstützen. Der ermittelte Überfahrbarkeitsindikator stellt Überfahrbarkeitsinformationen für ein Objekt dar, d.h., Informationen über die Überfahrbarkeit des Objekts.

Die Auswerteeinheit 20 und die Vorrichtung 24 können beispielsweise in Form von Programmeinheiten in einer Datenverarbeitungseinrichtung implementiert sein.

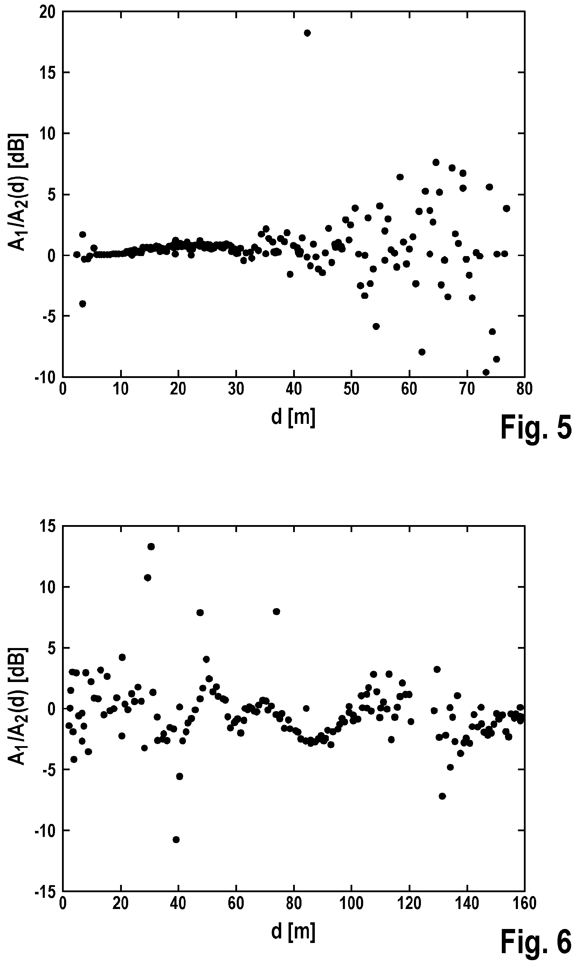

Fig. 5 und Fig. 6 zeigen beispielhaft reale Messungen eines abstandsabhängigen Verlaufs der Amplitudenverhältnisse der einem Objekt 14 zugeordneten Amplituden aus Messungen mit einer in zwei Teilrampen ähnlich dem in Fig. 2 gezeigten Beispiel unterteilten Frequenzmodulationsrampe, wobei die Teilrampen als erstes und zweites Radarsignal in der oben beschriebenen Weise ausgewertet wurden. Als Objekt 14 wurde ein Referenzobjekt verwendet, das annähernd einem idealen Punktziel entspricht. Fig. 5 zeigt die Amplitudenverhältnisse bei auf der Fahrbahn 16 liegendem Objekt 14, entsprechend einer Objekthöhe annähernd gleich Null. Fig. 6 zeigt die Amplitudenverhältnisse mit dem Referenzobjekt in einer Objekthöhe $h_o$ von 80 cm.

Während sich bei am Boden liegenden Objekt in Fig. 5 bei größeren Abständen (d > 40 m) aufgrund von Rauschen eine große Streuung der Amplitudenverhältnisse zeigt, ist im Abstandsbereich zwischen 10 m und 30 m ein glatter Verlauf der Amplitudenverhältnisse bei annähernd 0 dB zu erkennen. Das Nichtauftreten destruktiver Interferenz gestattet somit eine Bewertung des Objektes als überfahrbar.

In Fig. 6 ist deutlich zu erkennen, dass im gleichen Entfernungsbereich von 10 bis 30 m eine große Varianz der Amplitudenverhältnisse auftritt, so dass, insbesondere unter Berücksichtigung eines hohen Signal-Rausch-Verhältnisses, das Objekt 14 als potentiell nicht überfahrbar bewertet werden kann.

Eine weitergehende Auswertung des Verlaufs der Amplitudenverhältnisse kann erfolgen, indem Werte des Abstands d ermittelt werden, bei denen ein Auftreten von destruktiver Interferenz erkannt wird, und basierend auf den ermittelten Werten des Abstands d die Objekthöhe $h_o$ geschätzt wird. Die Abstände d, bei denen destruktive Interferenz auftritt, hängen von der Sensorhöhe und von der Objekthöhe ab. Insbesondere tritt näherungsweise für diejenigen Werte von d destruktive Interferenz auf, für die gilt:

$$n\pi \cong \frac{2\pi}{\lambda} h_O h_S \frac{1}{d} \qquad (1)$$

wobei n eine natürliche Zahl ist und λ die Wellenlänge des Radarsignals ist. Mit anderen Worten tritt destruktive Interferenz auf, wenn die rechte Seite der Gleichung (1) ein Vielfaches von π ist. Die Wellenlänge wird hier vereinfacht als $2c/(f_1+f_2)$ angenommen, wobei c die Lichtgeschwindigkeit ist, und wobei der jeweilige Wert von d, bei dem Interferenz auftritt, als Mitte zwischen einem positiven Spike und einem zugehörigen negativen Spike im Beispiel der Fig. 4 angenommen wird. Unter Berücksichtigung der Sensorhöhe $h_S$ kann somit aus den Werten 1/d, bei denen destruktive Interferenz auftritt, auf die Objekthöhe $h_o$ geschlossen werden. Je nach Genauigkeit der Bestimmung der Werte 1/d sind nur wenige Werte für eine Auswertung erforderlich.

Die Ermittelung der Objekthöhe kann in Form einer Ermittelung eines Objekthöhenbereichs aus mehreren Höhenbereichen erfolgen, wobei die Höhenbereiche beispielsweise wenigstens einen Höhenbereich entsprechend einer Fahrzeughöhe und wenigstens einen Höhenbereich entsprechend einem überfahrbaren Objekt umfassen. Die Objekthöhe kann beispielsweise geschätzt werden durch einen Mustervergleich, bei dem ein Muster von Bereichen der Werte von d, bei denen Interferenz auftritt, mit Vergleichsmustern verglichen werden, die jeweiligen Objekthöhenbereichen zugeordnet sind. Auf diese Weise kann aus dem Auffinden von Wertebereichen von d, innerhalb deren Interferenz auftritt, Höheninformation über das Objekt 14 bestimmt werden. Liegen beispielsweise gemessene Werte der Abstände d, bei denen destruktive Interferenz auftritt, in Bereichen um solche Abstände d, bei denen gemäß dem Beispiel von Fig. 4 destruktive Interferenz erwartet wird, so kann auf einen Objekthöhenbereich geschlossen werden, der insbesondere den Wert $h_o$=80cm umfasst.

Die Ermittelung der Objekthöhe kann auch durch Ermittelung der gemäß Gleichung (1) konstanten Wiederholrate der aufeinanderfolgenden Werten von $h_S/d$ erfolgen, bei denen destruktive Interferenz auftritt, wobei diese Wiederholrate annähernd gleich $\lambda/(2h_S)$ ist.

Die oben beschriebene Vorrichtung und das oben beschriebene Verfahren können Bestandteil einer Vorrichtung bzw. eines Verfahrens zur Detektierung und Klassifizierung von Objekten sein.

Während oben die Ermittlung eines Überfahrbarkeitsindikators anhand von Messungen mit einer Frequenzmodulationsrampe entsprechend Fig. 2 beispielhaft beschrieben wurden, ist es auch denkbar, die Erkennung des Auftretens von Interferenz für Radarsignale mehrerer Frequenzmodulationsrampen eines Messzyklus des Radarsensors 10 durchzuführen.

Im beschriebenen Ausführungsbeispiel wird ein Überfahrbarkeitsindikator ermittelt, ohne dass hierzu zusätzliche Messungen benötigt werden. Vielmehr können die ohnehin von der Auswerteeinheit 20 ausgewerteten Messungen einer zusätzlichen Auswertung durch die Vorrichtung 24 unterzogen werden. Die in unterschiedlichen Frequenzbereichen gesendeten Radarsignale sind im oben beschriebenen Beispiel Teil eines umfassenderen Radarsignals, das mit einer Frequenzrampe frequenzmoduliert wurde. Die einzelnen Radarsignale sind dabei zeitlich nacheinander angeordnete Teile des umfassenderen Radarsignals. Insbesondere entsprechen die einzelnen Radarsignale Rampenabschnitten der Frequenzmodulationsrampe des umfassenderen Radarsignals.

Abweichend von diesem Beispiel können auch Radarsignale verwendet werden, die getrennten Frequenzmodulationsrampen entsprechen, beispielsweise wenigstens zwei Radarsignale mit unterschiedlichen Mittenfrequenzen, die jeweils mit einer Frequenzrampe frequenzmoduliert sind. Vorzugsweise sollten die Radarsignale zeitlich unmittelbar aufeinanderfolgen oder einen nur geringen Abstand aufweisen, damit sich die Übertragungssituation zwischen den Radarsignalen möglichst nicht ändert.

Während in den oben beschriebenen Beispielen ein Radarsignal in zwei Teil-Signale unterteilt separat ausgewertet wird bzw. zwei getrennte Radarsignale ausgewertet werden, ist auch die Verwendung von mehr als zwei Radarsignalen zur Ermittlung des Überfahrbarkeitsindikators denkbar. Es können die Amplitudenverhältnisse zwischen den Kombinationen der verschiedenen Radarsignale ermittelt und ausgewertet werden, bei einer Unterteilung einer Frequenzrampe eines Radarsignals in drei Zeitabschnitte beispielsweise Amplitudenverhältnisse $A_1/A_2$, $A_1/A_3$ und $A_2/A_3$.

## Patentansprüche

1. Verfahren zum Ermitteln eines Überfahrbarkeitsindikators für ein Objekt (14) mittels frequenzmodulierter Radarsignale eines Kraftfahrzeug-Radarsensors (10),
   wobei basierend auf Amplituden ($A_1$; $A_2$) von empfangenen, von einem Objekt (14) reflektierten Radarsignalen ein Auftreten von Interferenz zwischen einem ersten Ausbreitungsweg von Radarsignalen zwischen einem Radarsensor (10) und dem Objekt (14) und einem zweiten Ausbreitungsweg mit zusätzlicher Reflexion an einer Fahrbahn (16) erkannt wird, und
   wobei basierend auf dem Erkennen eines Auftretens von Interferenz ein Überfahrbarkeitsindikator für das Objekt (14) ermittelt wird,
   **dadurch gekennzeichnet, dass** das Auftreten der Interferenz erkannt wird basierend auf Amplitudenverhältnissen zwischen empfangenen, von dem Objekt (14) reflektierten Radarsignalen, die in unterschiedlichen Frequenzbereichen gesendet wurden,
   wobei die in unterschiedlichen Frequenzbereichen gesendeten Radarsignale in zeitlicher Nähe zueinander gesendet werden, so dass in Situationen ohne Interferenz zwischen den ersten und zweiten Ausbreitungswegen die in unterschiedlichen Frequenzbereichen gesendeten, vom Objekt (14) reflektierten Radarsignale auf ihren Ausbreitungswegen im wesentlichen denselben Einflüssen unterliegen und die Amplituden ($A_1$; $A_2$) der jeweiligen Empfangssignale kaum voneinander abweichen.

2. Verfahren nach Anspruch 1, bei dem ein Auftreten von destruktiver Interferenz zwischen dem ersten Ausbreitungsweg und dem zweiten Ausbreitungsweg erkannt wird.

3. Verfahren nach Anspruch 1 oder 2, bei dem das Auftreten von Interferenz zwischen den ersten und zweiten Ausbreitungswegen basierend auf für einen Bereich eines Abstandes (d) zwischen dem Radarsensor (10) und dem Objekt (14) ermittelten Verlauf der Amplitudenverhältnisse erkannt wird.

4. Verfahren nach einem der vorstehenden Ansprüche, bei dem die in unterschiedlichen Frequenzbereichen gesendeten Radarsignale jeweils mit einer Frequenzrampe frequenzmoduliert sind, deren Mittenfrequenzen unterschiedlich sind.

5. Verfahren nach einem der vorstehenden Ansprüche, bei dem die unterschiedlichen Frequenzbereiche, in denen die Radarsignale gesendet wurden, sich untereinander nicht überlappen.

6. Verfahren nach einem der vorstehenden Ansprüche, bei dem die in unterschiedlichen Frequenzbereichen gesendeten Radarsignale Teile eines umfassenderen Radarsignals sind, welches mit einer sich über den zeitlichen Verlauf der einzelnen Radarsignale erstreckenden Frequenzrampe moduliert ist.

7. Verfahren nach einem der vorstehenden Ansprüche, bei dem das Auftreten von Interferenz basierend auf einem Maß der Abweichungen der Amplitudenverhältnisse von einem Mittelwert über einen Bereich eines Abstandes (d) zwischen dem Radarsensor (10) und dem Objekt (14) erkannt wird.

8. Verfahren nach einem der vorstehenden Ansprüche, bei dem in dem Schritt des Ermitteln des Überfahrbarkeitsindikators für das Objekt (14) der Überfahrbarkeitsindikator wenigstens einen ersten Zustand aufweist, wenn das Auftreten der Interferenz erkannt wird, und einen zweiten Zustand aufweist, wenn das Nicht-Auftreten der Interferenz erkannt wird.

9. Verfahren nach einem der vorstehenden Ansprüche, bei dem basierend auf dem Erkennen eines Auftretens von Interferenz und basierend auf wenigstens einem Wert des Abstandes (d) zwischen dem Radarsensor (10) und dem Objekt (14), bei welchem Abstand (d) Interferenz auftritt, Höheninformation ($h_o$) über das Objekt (14) ermittelt wird.

10. Verfahren nach einem der vorstehenden Ansprüche, bei dem der Überfahrbarkeitsindikator für das Objekt (14) basierend auf dem Erkennen eines Auftretens der Interferenz und basierend auf einem Abstand (d) zum Objekt (14) und/oder auf wenigstens einem Parameter, der eine Signalübertragungsqualität des Ausbreitungsweges zwischen dem Radarsensor (10) und dem Objekt (14) charakterisiert, ermittelt wird.

11. Vorrichtung zum Ermitteln eines Überfahrbarkeitsindikators für ein Objekt (14) mittels frequenzmodulierter Radarsignale eines Kraftfahrzeug-Radarsensors (10), aufweisend:

   - eine Erkennungseinheit (36) zum Erkennen eines Auftretens von Interferenz zwischen einem direkten Ausbreitungsweg von Radarsignalen zwischen dem Radarsensor (10) und dem Objekt (14) und einem indirekten Ausbreitungsweg mit zusätzlicher Reflexion an einer Fahrbahn (16), und
   - eine Bewertungseinheit (38), die dazu eingerichtet ist, basierend auf dem Erkennen eines Auftretens von Interferenz durch die Erkennungseinheit (36) einen Überfahrbarkeitsindikator für das Objekt (14) zu ermitteln,

   **dadurch gekennzeichnet, dass** die Vorrichtung weiter aufweist:

   - eine Einheit (32) zum Bestimmen von Amplitudenverhältnissen zwischen vom Radarsensor empfangenen, von einem Objekt (14) reflektierten Radarsignalen, die von einem Radarsensor (10) in unterschiedlichen Frequenzbereichen und in zeitlicher Nähe zueinander gesendet wurden, so dass in Situationen ohne Interferenz zwischen den ersten und zweiten Ausbreitungswegen die in unterschiedlichen Frequenzbereichen gesendeten, vom Objekt (14) reflektierten Radarsignale auf ihren Ausbreitungswegen im wesentlichen denselben Einflüssen unterliegen und die Amplituden ($A_1$; $A_2$) der jeweiligen Empfangssignale kaum voneinander abweichen,

   wobei die Erkennungseinheit (36) dazu eingerichtet ist, ein Auftreten von Interferenz zwischen einem direkten Ausbreitungsweg von Radarsignalen zwischen dem Radarsensor (10) und dem Objekt (14) und einem indirekten Ausbreitungsweg mit zusätzlicher Reflexion an einer Fahrbahn (16) basierend auf den bestimmten Amplitudenverhältnissen zu erkennen.

12. Vorrichtung nach Anspruch 11, eingerichtet zur Durchführung des Verfahrens nach einem der Ansprüche 1 bis 10.

13. Kraftfahrzeug-Radarsystem mit einer Vorrichtung nach Anspruch 11 oder 12.


**Claims**

1. Method for obtaining an indicator of whether an object (14) can be driven over, by means of frequency-modulated radar signals of a motor vehicle radar sensor (10), wherein an occurrence of interference between a first propagation path of radar signals between a radar sensor (10) and the object (14) and a second propagation path with additional reflection at a carriageway (16) is detected on the basis of amplitudes ($A_1$; $A_2$) of received radar signals which are reflected by an object (14), and
wherein an indicator of whether an object (14) can be driven over is obtained on the basis of the detection of an occurrence of interference,
**characterized in that** the occurrence of the interference is detected on the basis of amplitude conditions between received radar signals which are reflected by the object (14) and have been transmitted in different frequency ranges, wherein the radar signals which have been transmitted in different frequency ranges are transmitted in chronological proximity to one another, with the result that in situations without interference between the first and second propagation paths the radar signals which are transmitted in different frequency ranges and are reflected by the object (14) are subject to essentially the same influences on their propagation paths, and the amplitudes ($A_1$; $A_2$) of the respective reception signals hardly differ from one another at all.

2. Method according to Claim 1, in which an occurrence of destructive interference between the first propagation path and the second propagation path is detected.

3. Method according to Claim 1 or 2, in which the occurrence of interference between the first and second propagation paths is detected on the basis of the profile of the amplitude conditions which has been determined for a range of a distance (d) between the radar sensor (10) and the object (14).

4. Method according to one of the preceding claims, in which the radar signals which are transmitted in different frequency ranges are each frequency-modulated with a frequency ramp whose centre frequencies are different.

5. Method according to one of the preceding claims, in which the different frequency ranges in which the radar signals were transmitted do not overlap one another.

6. Method according to one of the preceding claims, in which the radar signals which are transmitted in different frequency ranges are parts of a more comprehensive radar signal which is modulated with a frequency ramp which extends over the chronological profile of the individual radar signals.

7. Method according to one of the preceding claims, in which the occurrence of interference is detected on the basis of a measure of the deviations of the amplitude conditions from a mean value over a range of a distance (d) between the radar sensor (10) and the object (14).

8. Method according to one of the preceding claims, in which, in the step of obtaining the indicator of whether an object (14) can be driven, the indicator of whether an object can be driven over has at least a first state when the occurrence of the interference is detected, and a second state when the non-occurrence of the interference is detected.

9. Method according to one of the preceding claims, in which altitude information ($h_o$) about the object (14) is obtained on the basis of the detection of an occurrence of interference and on the basis of at least one value of that distance (d) between the radar sensor (10) and the object (14) at which interference occurs.

10. Method according to one of the preceding claims, in which the indicator of whether an object (14) can be driven over is obtained on the basis of the detection of an occurrence of the interference and on the basis of a distance (d) from the object (14) and/or on the basis of at least one parameter which characterizes a signal transmission quality of the propagation path between the radar sensor (10) and the object (14).

11. Device for obtaining an indicator of whether an object (14) can be driven over by means of frequency-modulated radar signals of a motor vehicle radar sensor (10) having:

- a detection unit (36) for detecting an occurrence of interference between a direct propagation path of radar signals between the radar sensor (10) and the object (14) and an indirect propagation path with additional reflection at a carriageway (16), and
- an evaluation unit (38) which is configured to obtain an indicator of whether an object (14) can be driven over on the basis of the detection of an occurrence of interference by the detection unit (36),

**characterized in that** the device also has:

- a unit (32) for determining amplitude conditions between radar signals which are received by the radar sensor and which are reflected by an object (14) and have been transmitted by a radar sensor (10) in different frequency ranges and in chronological proximity to one another, with the result that in situations without interference between the first and second propagation paths the radar signals which are transmitted in different frequency ranges and reflected by the object (14) are subject to essentially the same influences on their propagation paths, and the amplitudes ($A_1$; $A_2$) of the respective reception signals hardly differ from one another at all,

wherein the detection unit (36) is configured to detect an occurrence of interference between a direct propagation path of radar signals between the radar sensor (10) and the object (14) and an indirect propagation path with additional reflection at a carriageway (16) on the basis of the amplitude conditions which are determined.

**12.** Device according to Claim 11, configured to carry out the method according to one of Claims 1 to 10.

**13.** Motor vehicle radar system having a device according to Claim 11 or 12.

**Revendications**

**1.** Procédé de détermination d'un indicateur de possibilité de traversée pour un objet (14) au moyen de signaux radar modulés en fréquence d'un capteur radar (10) de véhicule automobile,
la survenance d'interférences entre un premier parcours de propagation des signaux radar entre un capteur radar (10) et l'objet (14) et un deuxième parcours de propagation avec réflexion supplémentaire sur la chaussée (16) étant détectée sur la base des amplitudes ($A_1$; $A_2$) de signaux radar reçus et réfléchis par un objet (14) et un indicateur de possibilité de traversée pour l'objet (14) étant déterminé sur la base de la détection de la survenance d'interférences, **caractérisé en ce que**
la survenance d'interférences est détectée sur la base des rapports d'amplitude entre des signaux radar reçus et réfléchis par l'objet (14) et émis dans différentes plages de fréquences,
les signaux radar émis dans différentes plages de fréquences étant émis à proximité temporelle les uns des autres de telle sorte que dans des situations sans interférences entre le premier et le deuxième parcours de propagation, les signaux radar émis dans différentes plages de fréquences et réfléchis par l'objet (14) subissent essentiellement les mêmes influences et que les amplitudes ($A_1$; $A_2$) des différents signaux reçus ne s'écartent presque pas les unes des autres.

**2.** Procédé selon la revendication 1, dans lequel la survenance d'une interférence destructrice entre le premier parcours de propagation et le deuxième parcours de propagation est détectée.

**3.** Procédé selon les revendications 1 ou 2, dans lequel la survenance d'une interférence entre le premier et le deuxième parcours de propagation est détectée sur la base d'une évolution des rapports d'amplitude déterminée pour une plage de distance (d) entre le capteur radar (10) et l'objet (14).

**4.** Procédé selon l'une des revendications précédentes, dans lequel les signaux radar émis dans les différentes plages de fréquences sont tous modulés en fréquence à des rampes de fréquences dont les fréquences centrales sont différentes.

**5.** Procédé selon l'une des revendications précédentes, dans lequel les différentes plages de fréquences dans lesquelles les signaux radar sont émis ne se superposent pas mutuellement.

**6.** Procédé selon l'une des revendications précédentes, dans lequel les signaux radar émis dans les différentes plages de fréquences font partie d'un signal radar d'enveloppe qui est modulé par une rampe de fréquences qui s'étend sur l'évolution temporelle des différents signaux radar.

**7.** Procédé selon l'une des revendications précédentes, dans lequel la survenance d'une interférence est détectée sur la base d'une mesure des écarts entre les rapports d'amplitude et une valeur centrale sur une plage de distance (d) entre les capteurs radar (10) et l'objet (14).

**8.** Procédé selon l'une des revendications précédentes, dans lequel au cours de l'étape de détermination de l'indicateur de possibilité de traversée pour l'objet (14), l'indicateur de possibilité de traversée présente au moins un premier état lorsque la survenance de l'interférence est détectée et présente un deuxième état lorsque la non-survenance de l'interférence est détectée.

**9.** Procédé selon l'une des revendications précédentes, dans lequel une information de hauteur ($h_o$) concernant l'objet (14) est déterminée sur la base de la détection de la survenance d'une interférence sur la base d'au moins une valeur de l'écart (d) entre le capteur radar (10) et l'objet (14) et pour laquelle une distance (d) et une interférence survient.

**10.** Procédé selon l'une des revendications précédentes, dans lequel l'indicateur de possibilité de traversée pour l'objet (14) est déterminé sur la base de la détection de la survenance d'une interférence sur la base d'une distance (d) par rapport à l'objet (14) et/ou sur la base d'au moins un paramètre qui caractérise la qualité de la transmission des signaux sur le parcours de propagation qui s'étend entre le capteur radar (10) et l'objet (14).

11. Ensemble de détermination d'un indicateur de possibilité de traversée pour un objet (14) au moyen de signaux radar modulés en fréquence d'un capteur radar (10) de véhicule automobile, l'ensemble présentant :

une unité de détection (36) qui détecte la survenance d'une interférence entre un parcours de propagation directe de signaux radar entre le capteur radar (10) et l'objet (14) et un parcours de propagation indirecte avec réflexion supplémentaire sur une chaussée (16) et
une unité d'évaluation (38) conçue pour déterminer un indicateur de possibilité de traversée pour l'objet (14) sur la base de la détection de la survenance d'une interférence par l'unité de détection (36),

**caractérisé en ce que** le dispositif présente en outre :

une unité (32) qui détermine des rapports d'amplitude entre des signaux radar reçus par le capteur radar et réfléchis par l'objet (14), émis à proximité temporelle les uns des autres dans différents plages de fréquences par un capteur radar (10), de telle sorte que dans des situations sans interférence entre le premier et le deuxième parcours de propagation, les signaux radar émis dans différentes plages de fréquences et réfléchis par l'objet (14) subissent sur leur parcours de propagation essentiellement les mêmes influences et que les amplitudes ($A_1$; $A_2$) des différents signaux reçus ne s'écartent presque pas les unes des autres,
l'unité de détection (36) étant conçue pour détecter la survenance d'une interférence entre un parcours de propagation indirecte de signaux radar entre le capteur radar (10) et l'objet (14) et un parcours de propagation indirecte avec réflexion supplémentaire sur une chaussée (16) sur la base des rapports d'amplitude qui ont été définis.

12. Ensemble selon la revendication 11, conçu pour mettre en oeuvre le procédé selon l'une des revendications 1 à 10.

13. Système radar pour véhicule automobile doté d'un ensemble selon les revendications 11 ou 12.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005024716 A1
- DE 102010007415 A1
- DE 19801617 A1
- WO 9927384 A1
- EP 1923717 A1